(19) Europäisches Patentamt / European Patent Office / Office européen des brevets

(11) **EP 4 104 024 B1**

(12) **FASCICULE DE BREVET EUROPEEN**

(45) Date de publication et mention
de la délivrance du brevet:
**27.03.2024 Bulletin 2024/13**

(21) Numéro de dépôt: **21704284.5**

(22) Date de dépôt: **11.02.2021**

(51) Classification Internationale des Brevets (IPC):
**G05B 13/04** $^{(2006.01)}$  **G05B 17/02** $^{(2006.01)}$
**G05D 1/00** $^{(2024.01)}$

(52) Classification Coopérative des Brevets (CPC):
**G05B 17/02**

(86) Numéro de dépôt international:
**PCT/EP2021/053388**

(87) Numéro de publication internationale:
**WO 2021/160767 (19.08.2021 Gazette 2021/33)**

(54) **MESURE DE FONCTION DE TRANSFERTS DANS UN SYSTÈME MÉCATRONIQUE**

MESSUNG DER ÜBERTRAGUNGSFUNKTION IN EINEM MECHATRONISCHEN SYSTEM

MEASUREMENT OF TRANSFER FUNCTION IN A MECHATRONIC SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2020 FR 2001504**

(43) Date de publication de la demande:
**21.12.2022 Bulletin 2022/51**

(73) Titulaire: **Safran Electronics & Defense**
**75015 Paris (FR)**

(72) Inventeurs:
• **QUADRAT, Arnaud**
**77550 MOISSY-CRAMAYEL (FR)**
• **CUENANT, Mathieu**
**77550 MOISSY-CRAMAYEL (FR)**

(74) Mandataire: **Cabinet Boettcher et al**
**5, rue de Vienne**
**75008 Paris (FR)**

(56) Documents cités:
**US-A1- 2008 262 806**

• **HE SUN ET AL: "Identification and adaptive control of a high-contrast focal plane wavefront correction system", ARXIV.ORG, CORNELL UNIVERSITY LIBRARY, 201 OLIN LIBRARY CORNELL UNIVERSITY ITHACA, NY 14853, 28 juin 2018 (2018-06-28), XP081415066,**
• **LENNART LJUNG ED - LENNART LJUNG: "System Identification Toolbox 7 User's Guide", SYSTEM IDENTIFICATION TOOLBOX 7 USER'S GUIDE, THE MATHWORKS, PAGE(S) 1 - 24 , 30 septembre 2009 (2009-09-30), XP002683122, Extrait de l'Internet: URL:http://www.mathworks.co.jp/help/pdf_do c/ident/ident.pdf [extrait le 2020-12-02]**

EP 4 104 024 B1

**Description**

ARRIERE PLAN DE L'INVENTION

La présente invention concerne le domaine des systèmes asservis comme des systèmes mécatroniques ou électromécaniques.

Dans un tel système, l'entrée et la sortie du système sont liées entre elles par une fonction de transfert. La sortie d'un système comprenant un actionneur pour asservir la sortie du système en tenant compte d'une mesure de cette sortie dépend de l'entrée du système mais également de perturbations internes ou externes, de défauts dans la chaîne de commande, et/ou dans la boucle de rétroaction, et/ou dans l'actionneur... de sorte que la fonction de transfert du système peut être difficile à déterminer. Or, la connaissance de cette fonction de transfert permet de piloter plus précisément le système ainsi bouclé par l'actionneur et le ou les capteurs mesurant la sortie du système.

Il est connu de raccorder entre l'entrée et la sortie du système mécatronique ou électromécanique un analyseur de spectre ou un oscilloscope mettant en oeuvre des fonctions mathématiques ou de traitement du signal pour en déterminer la fonction de transfert. Ceci impose cependant de pouvoir raccorder un matériel externe en utilisant éventuellement des interfaces telles que des convertisseurs analogiques/numériques ou numériques/analogiques. La détermination de la fonction de transfert nécessite donc d'interrompre le fonctionnement du système pour ouvrir la boucle de rétroaction et conduire une opération de maintenance en faisant intervenir un opérateur. HE SUN ET AL:"Identification and adaptive control of a high-contrast focal plane wavefront correction system",ARXIV.ORG, CORNELL UNIVERSITY LIBRARY, 201 OLIN LIBRARY CORNELL UNIVERSITY (28 juin 2018)divulgue une approche de maximisation des attentes pour identifier et adapter en temps réel un modèle de télescope linéaire à partir de données.

OBJET DE L'INVENTION

L'invention a notamment pour but de permettre de déterminer au moins une des fonctions de transfert d'un système électromécanique ou mécatronique avec un impact limité sur son fonctionnement et avec un équipement limité.

RESUME DE L'INVENTION

A cet effet, on prévoit, selon l'invention un dispositif comprenant au moins un système électromécanique ayant une entrée et au moins une sortie, et une unité électronique de commande comportant un bouclage d'asservissement qui relie l'entrée et la sortie du système électromécanique et qui comporte un correcteur numérique. Le dispositif comprend un module logiciel ayant une entrée reliée à la sortie du système électromécanique et une sortie reliée à une entrée du système électromécanique, et le module logiciel est programmé pour, chaque fréquence d'un ensemble de fréquences à analyser :

- engendrer au moins un signal sinusoïdal d'excitation ;
- émettre le signal sinusoïdal d'excitation sur sa sortie et récupérer un signal de réponse sur son entrée ;
- modéliser par une représentation de Fresnel le signal de réponse et le filtrer autour de la fréquence d'excitation par au moins un filtre de Kalman pour obtenir un vecteur d'état du signal de réponse filtré ;
- multiplier le vecteur d'état par une matrice de rotation pour obtenir une partie réelle et une partie imaginaire ;
- effectuer une division de nombre complexe pour obtenir au moins une fonction de transfert du système à partir de la modélisation et du signal d'excitation et du signal d'entrée.

Le dispositif de l'invention permet de déterminer les fonctions de transfert suivantes pour un même système :

- la fonction de transfert de la boucle fermée avant et après l'injection du signal sinusoïdal ;
- la fonction de transfert de la boucle ouverte ;
- la fonction de transfert de la partie électromécanique ;
- la fonction de transfert de la partie correctrice.

Ces fonctions de transfert peuvent être déterminées par le dispositif de l'invention sans qu'il soit besoin de déboucler l'asservissement et les calculs nécessaires à l'estimation sont relativement simples et ne nécessitent pas de ressources de calcul importantes du fait de l'utilisation :

- d'une représentation de Fresnel pour modéliser les signaux d'excitation et de mesure dans le système ;
- d'un filtre de Kalman à gain convergé pour filtrer des mesures autour de la fréquence d'excitation ;
- d'un simple produit matriciel pour calculer la fonction de transfert (sous forme complexe) entre l'excitation et un des mesures (ce qui donne la boucle fermée avant ou après la perturbation suivant l'emplacement du point de mesure) ;
- différents points de mesures de la boucle (pour une même excitation) et par simples divisions des fonctions transfert complexes entre elles, il est possible d'obtenir :

  a. la fonction de transfert de la boucle ouverte,
  b. la fonction de transfert de la partie électromécanique,
  c. la fonction de transfert de la partie correctrice. L'invention est par exemple utilisable dans un système d'orientation et de stabilisation de la ligne de visée d'un dispositif optronique en pilotant la motorisation d'une plateforme gyro-stabilisée sur laquelle est monté le dispositif optronique.

Il est aussi possible d'utiliser l'invention dans d'autres systèmes d'actionnement tels que le système d'actionnement des gouvernes d'un aéronef.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

La figure 1 est une vue schématique en perspective d'un dispositif optronique mettant en œuvre l'invention ;
La figure 2 est une vue schématique de l'unité de commande de ce dispositif ;
La figure 3 est une vue schématique de détail de cette unité de commande de ce dispositif ;
La figure 4 est une représentation de Fresnel du signal de mesure et de la fonction de transfert du système ;
La figure 5 est une vue schématique en perspective d'un dispositif d'actionnement de gouvernes mettant en œuvre l'invention.

DESCRIPTION DETAILLEE DE L'INVENTION

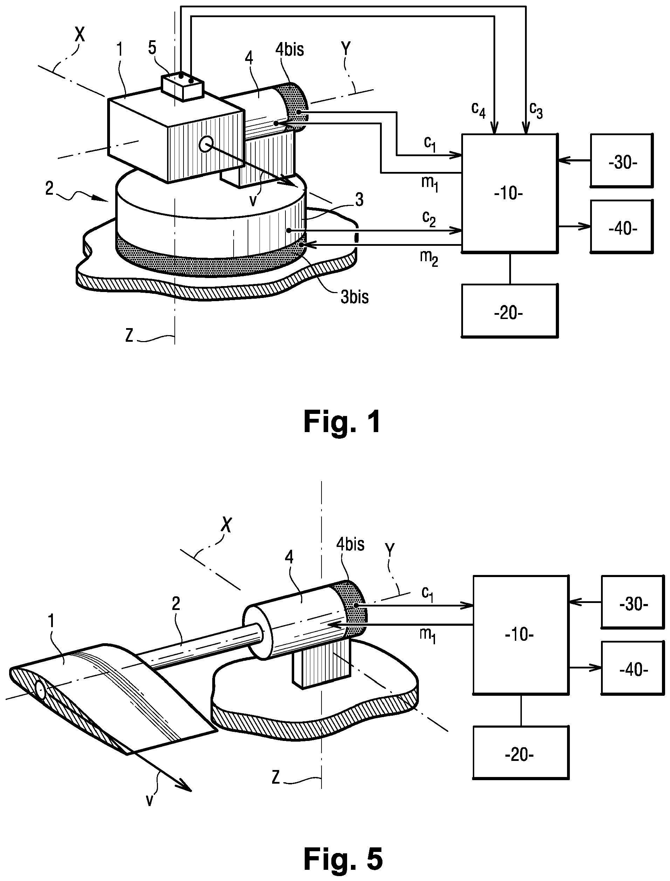

En référence en particulier à la figure 1, l'invention est ici décrite en application à un dispositif optronique comprenant un capteur optique 1 monté sur une plateforme gyro-stabilisée 2. La plateforme gyro-stabilisée 2 comprend deux axes motorisés, à savoir : un axe de gisement z permettant de régler l'orientation d'un axe de visée v du capteur optique 1 autour de l'axe de gisement z et un axe de site y perpendiculaire à l'axe de gisement z et à l'axe de visée v pour régler l'orientation de l'axe de visée v autour de l'axe de site y. Chacun des axes z, y est pourvu d'un moteur 3, 4 agencé pour orienter la ligne de visée v du capteur 1 autour de l'axe z, y respectivement et associé chacun à un capteur angulaire 3bis, 4bis comme un codeur ou résolveur.

Les moteurs 3, 4 et les capteurs angulaires associés 3bis, 4bis sont reliés à un dispositif de pilotage 10 qui transmet des commandes m1, m2 aux moteurs 3, 4 et qui reçoit des mesures c1, c2 des capteurs angulaires 3bis, 4bis.

Le capteur optique 1 est pourvu d'au moins un capteur angulaire inertiel 5 pour détecter une vitesse angulaire c3 de l'axe de visée v par rapport à un premier axe de référence colinéaire à l'axe de site y et une vitesse angulaire c4 de l'axe de visée v par rapport à un deuxième axe de référence perpendiculaire à l'axe de visée v et à l'axe de site y. Le capteur angulaire inertiel est ici un gyromètre à deux axes sensibles comme celui produit sous la marque GSL par la demanderesse. En variante, tout autre dispositif de mesure angulaire est utilisable et par exemple deux capteurs inertiels ayant chacun un axe sensible sont utilisables, comme celui produit sous la marque QUAPASON par la demanderesse. Le capteur inertiel peut être un capteur mécanique à résonateur vibrant, par exemple un résonateur hémisphérique, ou utiliser d'autres technologies comme les fibres optiques (capteur dit FOG).

Le capteur inertiel 5 est lui aussi relié au dispositif de pilotage 10 à qui il transmet les signaux de mesure c3, c4.

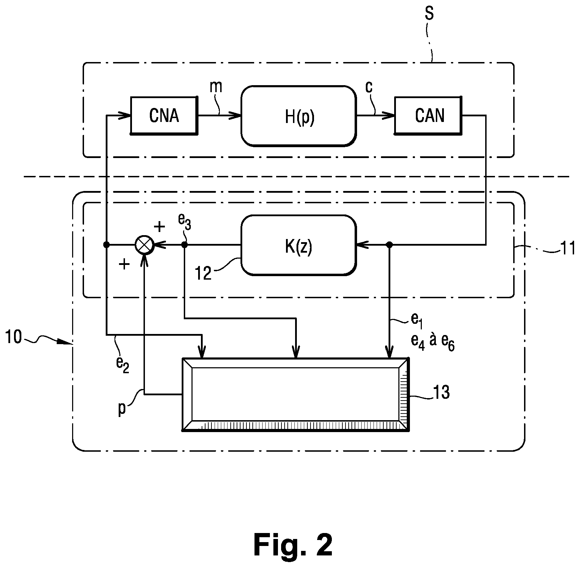

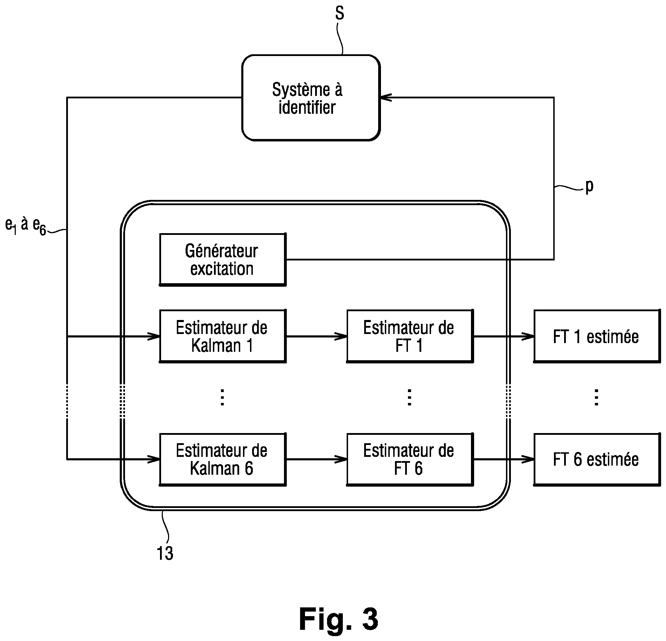

En référence également aux figures 2 et 3, chaque ensemble formé, pour chaque axe, par un moteur 3, 4 et un des capteurs angulaires associés 5, 3bis, 4bis (relatifs et/ou inertiels) forme un système linéaire S ayant une entrée (la ligne d'alimentation fournissant un signal de tension au moteur 3, 4) et une sortie (la ligne de sortie des capteurs angulaires 5, 3bis, 4bis fournissant un signal de mesure).

Le dispositif de pilotage 10 comprend une unité électronique de commande 11 comportant, pour chaque système linéaire noté H, une boucle d'asservissement qui relie l'entrée et la sortie du système linéaire par un correcteur numérique 12. L'unité électronique de commande 11 est ainsi agencée pour piloter via le correcteur numérique 12 les moteurs en fonction de commandes provenant d'une interface utilisateur 20 (visible sur la figure 1) et des signaux de mesure provenant soit des codeurs soit du ou des capteurs inertiels. On comprend que chaque signal de commande m en entrée d'un des moteurs 3, 4 provoque un mouvement correspondant du capteur optique 1, mouvement qui est détecté par le capteur angulaire relatif 3bis, 4bis ou inertiel 5 qui est sensible selon l'axe correspondant au moteur 3, 4 et qui émet un signal de mesure c correspondant à la convolution de la fonction de transfert H par l'écart du signal de mesure c avec la consigne, soit :

$$m=K*(consigne-c)$$

et

$$c=H*m.$$

Ce mode de fonctionnement est classique et ne sera pas décrit plus avant ici.

Le dispositif de pilotage 10 échange des données avec des modules mémoires 30 et 40. Le module mémoire 30 comporte un tableau des fréquences $f_p$ à balayer, de l'amplitude $P_0$ du signal d'excitation associé, du vecteur des gains de Kalman $K_f$ associés.

Le dispositif de pilotage 10 comprend un module logiciel 13 ayant une sortie p reliée à une sortie e3 du correcteur numérique 12, au moins une première entrée de mesure e1 reliée en amont d'une entrée du correcteur numérique 12 et deux entrées de mesure e2 et e3 reliées à la sortie du correcteur numérique 12 en aval et en amont de la liaison de ladite sortie du correcteur numérique 12 avec la sortie p du module logiciel 13. Ainsi, la sortie p additionnée à la sortie e3 du correcteur numérique 12 donne la commande e2 qui sera appliquée au moteur via le convertisseur numérique/analogique et le signal m

Le module logiciel 13 est programmé pour :

- former un générateur d'excitation à base d'une matrice d'incrément de rotation et d'une modélisation de Fresnel, le générateur étant agencé pour émettre (vers une entrée p du système S) des signaux sinusoïdaux d'excitation P de différentes fréquences et/ou amplitudes sur la sortie du correcteur en utilisant une somme logicielle e2=e3+P ;
- récupérer sur chacune de ses entrées un signal sinusoïdal de mesure e1 à e6 pour chacun des signaux sinusoïdaux d'excitation ;
- modéliser les signaux de mesures e1 à e6 (figure 3) à partir d'un vecteur de Fresnel et d'une représentation d'état ;
- filtrer les signaux de mesure e1 à e6 par des filtrages passe-bande autour de la fréquence d'excitation au moyen de plusieurs filtres de Kalman mis en parallèle pour obtenir des vecteurs d'état des signaux de mesures filtrés ;
- multiplier les vecteurs d'état des signaux filtrés par une matrice de rotation « T » pour obtenir les parties réelle et imaginaire des fonctions de transfert. Les composantes de la matrice de rotation « T » sont obtenues à partir des composantes du vecteur d'excitation ;
- mémoriser les parties réelle et imaginaire des fonctions de transfert (référence 40 sur la figure 1) et obtenir les fonctions de transfert du bouclage en utilisant des divisions de nombres complexes.

Le module logiciel 13 est agencé pour balayer plusieurs fréquences en récupérant pour chacune d'elle l'amplitude de l'excitation et les gains des filtres de Kalman stockés dans une mémoire (30 -figure 1).

Le module logiciel 13 est agencé par exemple pour pouvoir estimer plusieurs fonctions de transfert, identifiées FT1 à FT6 sur la figure 3, représentative chacune d'un ensemble de six mesures (par exemple courants, vitesses inertielles, positions relatives) appartenant à un système électromécanique S mis en œuvre dans un même dispositif.

Le principe, selon l'invention, de la détermination d'une des fonctions de transfert va maintenant être décrit dans ses trois phases principales : génération d'un signal d'excitation sinusoïdal à la fréquence $f_p$, filtrage passe-bande en utilisant un filtrage de Kalman autour de la fréquence $f_p$, multiplication par une matrice de rotation pour obtenir la partie réelle et imaginaire de la fonction de transfert entre l'excitation et la mesure considérée à la fréquence $f_p$.

Le signal d'excitation (perturbateur) est un signal sinusoïdal, par exemple un cosinus d'amplitude $P_0$ à la fréquence $\boldsymbol{f_p}$, et peut se modéliser sous la forme d'un vecteur qui est représentatif d'un nombre complexe et qui tourne à une vitesse constante $\dot{\theta} = \boldsymbol{2\pi . f_P}$ (représentation dite de Fresnel). A l'instant $t_k$, le nombre complexe s'écrit :

$$\hat{P}_k \triangleq P_0.\exp(i.2\pi.f_P.t_k) = P_0.\exp(i.\theta_k) = P_0.\cos(\theta_k) + i.P_0.\sin(\theta_k)$$

La perturbation en tension réellement injectée peut s'exprimer comme étant la partie réelle du nombre complexe, soit :

$$P_k = P(t_k) = P_0.\cos(\theta_k) = Re\{P_0.\exp(i.2\pi.f_P.t_k)\}$$

La partie imaginaire du nombre complexe est, elle, laissée libre :

$$P_0.\sin(\theta_k) = Im\{P_0.\exp(i.2\pi.f_P.t_k)\}$$

Ceci s'écrit sous forme matricielle de la façon suivante :

$$X_k^P \triangleq \begin{bmatrix} Re\{\hat{P}\} \\ Im\{\hat{P}\} \end{bmatrix} = \begin{bmatrix} Re\{P_0.\exp(i.2\pi.f_P.t_k)\} \\ Im\{P_0.\exp(i.2\pi.f_p.t_k)\} \end{bmatrix} = \begin{bmatrix} P_0 \ \cos(\theta_k) \\ P_0 \ \sin(\theta_k) \end{bmatrix}$$

Pour une fréquence $f_p$ fixée, la matrice de transition entre deux périodes d'échantillonnage $T_e$ correspond à la rotation d'angle $\Delta\theta = \theta_{k+1} - \theta_k = 2\pi.f_p.T_e$ où $T_e$ est la période d'échantillonnage du calculateur ($T_e = t_{k+1} - t_k$). La matrice de transition s'écrit :

$$\Delta A = \begin{bmatrix} \cos(2\pi f_p T_e) & -\sin(2\pi f_p T_e) \\ \sin(2\pi f_p T_e) & \cos(2\pi f_p T_e) \end{bmatrix}$$

La relation matricielle entre deux instants consécutifs est donc :

$$\begin{bmatrix} P_0 \ \cos(\theta_{k+1}) \\ P_0 \ \sin(\theta_{k+1}) \end{bmatrix} = \begin{bmatrix} P_0 \ \cos(\theta_k + \Delta\theta) \\ P_0 \ \sin(\theta_k + \Delta\theta) \end{bmatrix} = \Delta A \begin{bmatrix} P_0 \ \cos(\theta_k) \\ P_0 \ \sin(\theta_k) \end{bmatrix}$$

On remarquera pour la suite que la matrice de rotation à l'instant k est le produit de k incréments de transition :

$$A_k = (\Delta A)^k = \begin{bmatrix} \cos(\theta_k) & -\sin(\theta_k) \\ \sin(\theta_k) & \cos(\theta_k) \end{bmatrix} = \frac{1}{P_0} \begin{bmatrix} (X_k^P)_1 & -(X_k^P)_2 \\ (X_k^P)_2 & (X_k^P)_1 \end{bmatrix}$$

On remarque que la matrice de rotation inverse est simplement la transposée. Elle se calcule aussi avec les composantes du vecteur d'excitation :

$$(A_k)^{-1} = \begin{bmatrix} \cos(\theta_k) & \sin(\theta_k) \\ -\sin(\theta_k) & \cos(\theta_k) \end{bmatrix} = \frac{1}{P_0} \begin{bmatrix} (X_k^p)_1 & (X_k^p)_2 \\ -(X_k^p)_2 & (X_k^p)_1 \end{bmatrix}$$

La notation $(\bullet)_n$ désigne la « $n^{\text{ième}}$ » composante du vecteur représentatif de la perturbation.

En considérant la perturbation $P_k$ comme la première composante du vecteur d'état, on obtient le système dynamique discret suivant :

$$\begin{cases} X_{k+1}^P = \Delta A.X_k^P \\ P_k = C.X_k^P \end{cases}$$

dans lequel B=D=0 et C=[1 0].

Suivant la figure 2, on applique le signal d'excitation (perturbation) sur la sortie du correcteur numérique en utilisant une somme logicielle $e_2 = e_3 + P$.

La forme matricielle du système dynamique sera adaptée pour faire du filtrage de Kalman. On prend $P_0$ comme condition initiale d'amplitude du signal d'excitation (perturbateur) et une phase nulle de sorte que le vecteur initial est :

$$X_0^P = \begin{bmatrix} P_0 \\ 0 \end{bmatrix}$$

Concernant la réponse fréquentielle du système électromécanique et produit matriciel, la formulation sous forme de système dynamique linéaire permet d'assimiler le système physique à un filtre linéaire qui reçoit en entrée la perturbation $P_k$ pour donner en sortie la mesure $M_k$. Avec la transformée en z et en notant $\hat{F}(z)$ la fonction de transfert que l'on cherche à estimer, on obtient :

$$\widehat{M}(z) = \hat{F}(z)\hat{P}(z)$$

Avec l'opérateur retard $z^{-1} = \exp(-i.2\pi.f.T_e)\ \forall f$, on a :

$$M_{k-1} = z^{-1}.M_k$$

Pour un système linéaire excité avec un cosinus pur à la fréquence $f_p$, la mesure est un cosinus d'amplitude $M_P$ et de phase $\psi_P$ et prend la forme matricielle suivante :

$$X_k^M \triangleq \begin{bmatrix} Re\{\widehat{M}_k\} \\ Im\{\widehat{M}_k\} \end{bmatrix} = \begin{bmatrix} M_P.\cos(2\pi.f_P.t_k + \psi_P) \\ M_P.\sin(2\pi.f_P.t_k + \psi_P) \end{bmatrix}$$

La mesure directement accessible est $M_k = C.X_k^M$ alors que l'on cherche :

$$\hat{F}(f_P) \triangleq \frac{\widehat{M}(f_P)}{\hat{P}(f_P)} = \frac{M_P.\exp(i(2\pi.f_P.t_k + \psi_P))}{P_0 \exp(i.2\pi.f_P.t_k)} = \frac{M_P}{P_0}\exp(i\psi_P)$$
$$= \frac{M_P}{P_0}\cos(\psi_P) + i\frac{M_P}{P_0}\sin(\psi_P)$$

Qui s'écrit sous forme matricielle :

$$X^F \triangleq \begin{bmatrix} Re\{\hat{F}(f_P)\} \\ Im\{\hat{F}(f_P)\} \end{bmatrix} = \begin{bmatrix} \frac{M_P}{P_0}.\cos(\psi_P) \\ \frac{M_P}{P_0}.\sin(\psi_P) \end{bmatrix}$$

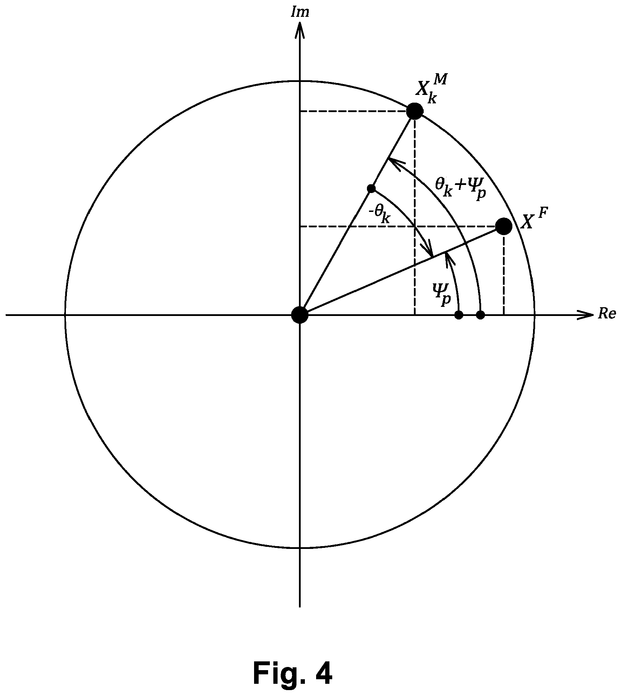

La mesure « matricielle » $X_k^M$ et la fonction de transfert $X^F$ sont unies par les relations trigonométriques suivantes (voir la représentation de Fresnel de la figure 4) :

$$X_k^M = \begin{bmatrix} \cos(\theta_k) & -\sin(\theta_k) \\ \sin(\theta_k) & \cos(\theta_k) \end{bmatrix}.X^F.P_0$$

Soit, en l'inversant :

$$X^F = \frac{1}{P_0}\begin{bmatrix} \cos(\theta_k) & -\sin(\theta_k) \\ \sin(\theta_k) & \cos(\theta_k) \end{bmatrix}^{-1} X_k^M = \frac{1}{P_0}\begin{bmatrix} \cos(\theta_k) & \sin(\theta_k) \\ -\sin(\theta_k) & \cos(\theta_k) \end{bmatrix} X_k^M = \frac{A_k^{-1}}{P_0}X_k^M$$
$$= \frac{1}{P_0^2}\begin{bmatrix} (X_k^p)_1 & (X_k^p)_2 \\ -(X_k^p)_2 & (X_k^p)_1 \end{bmatrix} X_k^M$$

Et :

$$X^F = T_k . X_k^M$$

$$T_k = \frac{1}{P_0{}^2}\begin{bmatrix} (X_k^P)_1 & (X_k^P)_2 \\ -(X_k^P)_2 & (X_k^P)_1 \end{bmatrix}$$

Les composantes réelles et imaginaires de la fonction de transfert sont obtenues par un simple produit matriciel du signal de mesure idéal avec une simple matrice de rotation dont les composantes sont déjà calculées par la génération du signal d'excitation : $\hat{F}(f_P) = (X^F)_1 + i(X^F)_2$ avec i l'imaginaire pur tel que i² = -1.

On aborde désormais le filtrage passe-bande par filtrage de Kalman.

Pour estimer la partie réelle et la partie imaginaire de la mesure $X_k^M$ à partir de la mesure réelle $M_k$, on utilise un filtre de Kalman à gain convergé qui fait office de filtre passe-bande sélectif autour de la fréquence d'excitation :

$$\begin{cases} X_{k+1}^M = \Delta A . X_k^M + B . w_k \\ M_k = C . X_k^M + v_k \end{cases}$$

Dans lequel :

- $w_k$ est le bruit du modèle scalaire,
- $v_k$ est le bruit de mesure scalaire,
- $\Delta A$ la matrice de transition,
- C=[1 0] est la matrice d'observation du générateur de perturbation,
- $B^T$=[1 1] est la matrice d'injection des bruits d'état. La variance du bruit de mesure est $V = E[v_k^2]$ .

La matrice de variance du bruit de modèle est :

$$W = B\, E[w_k^2] B^T$$

Le filtre peut se représenter sous la forme de la représentation d'état suivante :

$$\begin{cases} \hat{X}_{k+1|k}^M = \Delta A(I - K_f\, C)\hat{X}_{k|k-1}^M + \Delta A\, K_f\, M_k \\ \hat{X}_{k|k}^M = (I - K_f\, C)\hat{X}_{k|k-1}^M + K_f\, M_k \end{cases}$$

La matrice $K_f$ est la matrice de gain convergé du filtre de Kalman telle que :

$$K_f = ZC^T(C\, Z\, C^T + V)^{-1}$$

Et

$$\Delta A\, Z\, (\Delta A)^T - Z - \Delta A\, Z\, C^T(C\, Z\, C^T + V)^{-1}C\, Z\, (\Delta A)^T + W = 0$$

Dans lesquelles Z est la solution de l'équation de Riccati. En pratique, pour déterminer en temps réel la fonction de transfert du système linéaire, on connaît la fréquence $f_P$ de chaque signal de perturbation, l'amplitude $P_0$, la durée du filtrage $T_f$ et le gain du filtre de Kalman soit :

$$K_f = \begin{bmatrix} k_1 \\ k_1 \end{bmatrix}$$

Pour effectuer le balayage de toutes les fréquences dans un intervalle donné, on met en oeuvre l'algorithme suivant :

Algorithme :

- Passer toutes les fréquences $f_p$ en revue

  • Si $t_k = 0$

  Initialiser : $X_0^P = \begin{bmatrix} P_0 \\ 0 \end{bmatrix}$

  Calculer $\Delta A = \begin{bmatrix} \cos(2\pi f_p T_e) & -\sin(2\pi f_p T_e) \\ \sin(2\pi f_p T_e) & \cos(2\pi f_p T_e) \end{bmatrix}$

  • Si $0 < t_k < T_f$ alors

  Calculer la perturbation $\begin{cases} X_{k+1}^P = \Delta A . X_k^P \\ P_k = C . X_k^P \end{cases}$

  Mémoriser l'état de la perturbation $X_k^P \leftarrow X_{k+1}^P$

  Affecter la perturbation à la tension moteur : $P_k$ Lire les mesures : $M_k$

  Filtrer pour chaque mesure : $\begin{cases} \hat{X}_{k+1|k}^M = \Delta A (I - K_f C)\hat{X}_{k|k-1}^M + \Delta A \, K_f \, M_k \\ \hat{X}_{k|k}^M = (I - K_f C)\hat{X}_{k|k-1}^M + K_f \, M_k \end{cases}$

  Mémoriser pour chaque mesure : $\hat{X}_{k|k-1}^M \leftarrow \hat{X}_{k+1|k}^M$

  • Si $t_k = T_f$ alors $T_k = \frac{1}{P_0^2} \begin{bmatrix} (X_k^P)_1 & (X_k^P)_2 \\ -(X_k^P)_2 & (X_k^P)_1 \end{bmatrix}$

  Calculer et mémoriser pour la fréquence courante de chaque mesure : $X^F = T_k . \tilde{\hat{X}}_{k|k}^M$

  $t_k = 0$ et passer à la nouvelle fréquence

Sortie

- $X^F = [réel\ FT,\ imag\ FT]^T$ pour chaque fréquence et chaque mesure.

On notera qu'ici les équations du filtre de Kalman ont été mises sous la forme d'un filtre récursif avec un seul vecteur d'état comme dans l'équation 2.31 du document D. Alazard, Introduction au filtrage de Kalman. Il est cependant possible de les écrire aussi sous la forme prédiction/recalage avec deux vecteurs d'état (voir les équations 2.23 et 2.25 du même document) comme dans la suite de la présente description en relation avec la composante continue.

On obtient donc ainsi une estimation d'au moins trois fonctions de transfert du système bouclé, entre le signal d'excitation et au moins trois mesures, telles que $\hat{F}_{mes\ n}(f_p) = \frac{e_n}{s_1}$ sans avoir eu besoin de l'intervention d'un opérateur pour séparer la boucle d'asservissement de l'actionneur.

Les différentes fonctions de transfert du bouclage sont ensuite déterminées de la manière suivante.

Avec les notations de la figure 2, et en utilisant des divisions de nombres complexes, on réaliser les opérations suivantes :

a/ Pour la fréquence courante, mémoriser pour la fréquence courante les parties réelles d'au moins les trois boucles fermée suivantes:

$$\hat{F}_{mes\,1}\big(f_p\big) = \frac{e_1}{s_1} = \frac{H}{1 + KH}$$

$$\hat{F}_{mes\,2}\big(f_p\big) = \frac{e_2}{s_1} = \frac{1}{1 + KH}$$

$$\hat{F}_{mes\,3}\big(f_p\big) = \frac{e_3}{s_1} = \frac{KH}{1 + KH}$$

b/ Calculer la boucle ouverte avec :

$$H\,K = \frac{e_3}{e_2} = \hat{F}_{mes\,3}/\hat{F}_{mes\,2}$$

c/ Calculer la fonction de transfert de la partie électromécanique :

$$H\ = \frac{e_1}{e_2} = \hat{F}_{mes\,1}/\hat{F}_{mes\,2}$$

On aborde ensuite un mode de réalisation préféré dans lequel on procède à une reformulation et une extension pour prendre en compte la composante continue des mesures. Selon le mode de réalisation préféré, on injecte, non plus un cosinus, mais un sinus d'excitation ayant une fréquence $f_p$ prédéterminée (en Hz).

Lors de l'injection du signal d'excitation de type sinus dans un système linéaire, le système répond par une raie sinus amplifiée d'un gain $G_p = \dfrac{M_p}{P_0}$ et déphasée d'une phase $\Psi_p$

La représentation d'état de la raie sinusoïdale de la mesure sans composante continue est donc de dimension 2 et donnée par :

$$\begin{cases} X_{k+1}^S = \begin{bmatrix} \cos\big(2\pi\,f_p\,T_e\big) & -\sin\big(2\pi\,f_p\,T_e\big) \\ \sin\big(2\pi\,f_p\,T_e\big) & \cos\big(2\pi\,f_p\,T_e\big) \end{bmatrix} X_k^S \\ Y_k^S = [0 \quad 1]X_k^S \end{cases}$$

Avec

$$X_0^S = \begin{bmatrix} M_p \cos(\Psi_p) \\ M_p \sin(\Psi_p) \end{bmatrix}$$

$$X_k^S = \begin{bmatrix} M_p \cos\big(2\pi\,f_p k\,T_e + \Psi_p\big) \\ M_p \sin\big(2\pi\,f_p\,kT_e + \Psi_p\big) \end{bmatrix}$$

$$Y_k^S = G_p P_0 \sin\big(2\pi\,f_p\,kT_e + \Psi_p\big)$$

Le vecteur d'état représente l'abscisse (cosinus) et l'ordonnée (sinus) d'un vecteur tournant sur un cercle de rayon $M_p = G_p P_0$ à la fréquence $f_p$ depuis la position initiale déterminée par l'angle $\Psi_p$.

Ainsi, on a les matrices de la représentation d'état du vecteur de Fresnel :

$$\begin{cases} \Delta A = \begin{bmatrix} \cos(2\pi\, f_p\, T_e) & -\sin(2\pi\, f_p\, T_e) \\ \sin(2\pi\, f_p\, T_e) & \cos(2\pi\, f_p\, T_e) \end{bmatrix} \quad B = \begin{bmatrix} 0 \\ 0 \end{bmatrix} \\ \qquad\qquad C = \begin{bmatrix} 0 & 1 \end{bmatrix} \qquad\qquad D = 0 \end{cases}$$

où, de manière classique en représentation d'état, $\Delta A$ est la matrice de transition, B la matrice de commande, C la matrice d'observation et D la matrice d'action directe.

Cependant, en pratique, il est probable que la réponse du système comprendra également une composante continue correspondant au point de fonctionnement autour duquel le système est excité.

Cette composante continue constitue un biais dont la représentation d'état discrète est donnée ci-dessous :

$$\begin{cases} X^B_{k+1} = X^B_k \\ Y^B_k = X^B_k \end{cases}$$

$$X^B_0 = biais$$

En ajoutant cette représentation à la représentation d'état de la raie sinus, on obtient la représentation d'état d'un sinus avec composante continue de dimension 3 pour les différentes mesures, à savoir :

$$\begin{cases} X^M_{k+1} = \begin{bmatrix} \cos(2\pi\, f_p\, T_e) & -\sin(2\pi\, f_p\, T_e) & 0 \\ \sin(2\pi\, f_p\, T_e) & \cos(2\pi\, f_p\, T_e) & 0 \\ 0 & 0 & 1 \end{bmatrix} X^M_k \\ \qquad Y^M_k = \begin{bmatrix} 0 & 1 & 1 \end{bmatrix} X^M_k \end{cases} \qquad (1)$$

Avec

$$\begin{cases} \Delta A_M = \begin{bmatrix} \cos(2\pi\, f_p\, T_e) & -\sin(2\pi\, f_p\, T_e) & 0 \\ \sin(2\pi\, f_p\, T_e) & \cos(2\pi\, f_p\, T_e) & 0 \\ 0 & 0 & 1 \end{bmatrix} \quad B_M = \begin{bmatrix} 0 \\ 0 \\ 0 \end{bmatrix} \\ \qquad\qquad C_M = \begin{bmatrix} 0 & 1 & 1 \end{bmatrix} \qquad\qquad D_M = 0 \end{cases}$$

$$X^M_0 = \begin{bmatrix} M_p \cos(\Psi_p) \\ M_p \sin(\Psi_p) \\ b_0 \end{bmatrix}$$

$$X^M_K = \begin{bmatrix} M_p \cos(2\pi f_p k\, T_e + \Psi_p) \\ M_p \sin(2\pi f_p k\, T_e + \Psi_p) \\ b_0 \end{bmatrix} \qquad (2)$$

$$Y^M_k = b_0 + G_p P_0 \sin(2\pi f_p k\, T_e + \Psi_p)$$

Le générateur d'excitation n'a pas besoin lui d'une composante continue. Pour concevoir le générateur d'excitation sinusoïdale, il suffit de simuler le modèle décrit par la représentation d'état de la raie sinus. Le choix de l'amplitude et de la phase est effectué en imposant les conditions initiales du modèle. On choisit une phase nulle pour le sinus à générer de manière à démarrer progressivement l'excitation du système (sin(t=0)=0). On obtient comme suit un générateur de sinus d'amplitude $P_0$ :

- de condition initiale

$$X_0^P = \begin{bmatrix} P_0 \\ 0 \end{bmatrix}$$

- avec la dynamique du signal d'excitation:

$$X_{k+1}^P = \Delta A_P X_k^P$$

$$P_k = C_P X_k^P$$

- et les matrices de la représentation d'état:

$$\begin{cases} \Delta A_P = \begin{bmatrix} \cos(2\pi f_p T_e) & -\sin(2\pi f_p T_e) \\ \sin(2\pi f_p T_e) & \cos(2\pi f_p T_e) \end{bmatrix} & B_P = \begin{bmatrix} 0 \\ 0 \end{bmatrix} \\ C_P = \begin{bmatrix} 0 & 1 \end{bmatrix} & D_P = 0 \end{cases}$$

Chaque mesure issue d'un capteur est une raie sinus présentant une composante continue, dont on estimera l'état du vecteur de Fresnel grâce à un filtre de Kalman formant un estimateur correspondant à un filtre passe bande autour de la fréquence $f_p$ pour les deux premières composantes du vecteur d'état et un filtre passe bas pour la partie continue, en se basant sur le modèle (1), (2). Cet état une fois estimé, on est capable d'estimer la fonction de transfert correspondante entre l'excitation (entrée) et la mesure (sortie).

En sortie de l'estimateur de fonction transfert, on aura directement la partie réelle et la partie imaginaire de la fonction de transfert à la fréquence $f_p$.

Le modèle de l'estimateur de Kalman augmenté prend la forme générale suivante :

$$\begin{cases} X_{k+1}^M = \Delta A_M X_k^M + B_M U_k + M w_k \\ Y_k^M = C_M X_k^M + D_M U_k + v_k \end{cases}$$

Avec :

- $\Delta A_M$, $B_M$, $C_M$, $D_M$ comme précédemment,
- $U_k$ représente les commandes,
- $v_k$ le bruit de mesure,
- $w_k$ le bruit du modèle,
- et la matrice M choisie est la suivante

$$M = \begin{pmatrix} 1 & 0 & 0 \\ 0 & 1 & 0 \\ 0 & 0 & 1 \end{pmatrix}$$

Comme les matrices $B_M$, $D_M$ sont nulles, il est possible de simplifier le modèle :

$$\begin{cases} X_{k+1}^M = \Delta A_M X_k^M + M w_k \\ Y_k^M = C_M X_k^M + v_k \end{cases}$$

On note V[1×1] et W[3x3] les matrices de covariance du bruit de mesure $v_k$ et du bruit de modèle $w_k$ qui sont supposés gaussiens dans le cas d'un estimateur de Kalman linéaire. Le régime permanent de l'estimateur est déterminé uniquement par le choix des matrices de covariance V et W. Vu que l'estimateur est implémenté en gain convergé, on peut fixer arbitrairement V=1 sans perdre de généralité. On choisit W, la matrice de covariance du bruit du modèle, comme suit :

$$W = \begin{pmatrix} \sigma_{raie}^2 & 0 & 0 \\ 0 & \sigma_{raie}^2 & 0 \\ 0 & 0 & \sigma_{biais}^2 \end{pmatrix}$$

Ainsi, le choix du couple de variances $(\sigma_{raie}^2 \quad \sigma_{biais}^2)$ permet de définir complètement l'estimateur de Kalman en régime permanent.

Une représentation d'état de l'estimateur est notée :

$$\left[ \begin{array}{c|c} A_K & B_K \\ \hline C_K & D_K \end{array} \right]$$

On obtient alors :

$$\begin{cases} A_K = \Delta A_M (I - K_f C_M) & B_K = \Delta A_M K_f \\ C_K = I - K_f C_M & D_K = K_f \end{cases}$$

Avec

$$K_f = Z C_M^T (C_M Z C_M^T + V)^{-1}$$

Dans cette représentation, Z est l'unique solution stabilisante de l'équation algébrique de Riccati :

$$Z = \Delta A\, Z\, (\Delta A)^T - \Delta A\, Z\, C_M^T (C_M Z C_M^T + V)^{-1}\, C_M\, Z\, (\Delta A)^T + W$$

On notera que cette équation présente une singularité dans le cas où la fréquence $f_p$ est égale à la moitié de la fréquence d'échantillonnage $F_e=1/T_e$. Dans le cas général, cette équation peut être résolue par exemple avec la fonction « dare » du langage « Matlab » qui permet également de déterminer les valeurs propres de $A_k$ permettant de déterminer la constante de temps $\tau_K$ du filtre passe-bande pour les deux premières composantes du vecteur d'état et du filtre passe-bas de la composante continue.

Comme indiqué ci-dessus, le réglage de l'estimateur (c'est-à-dire la largeur de bande autour de $f_p$ et de la fréquence de coupure pour le filtre passe-bas) est obtenu par le choix du couple de variances $(\sigma_{raie}^2 \quad \sigma_{biais}^2)$ qui permet de définir complètement l'estimateur de Kalman en régime permanent.

Considérant la variance $\sigma_{biais}^2$ fixée, une diminution de la variance $\sigma_{raie}^2$ induit une diminution de la largeur du filtrage passe-bande et donc une meilleure estimation de la raie du fait d'un meilleur filtrage du bruit et des éventuelles non-linéarités du système. Si la constante de temps du filtre $\tau_K$ est égale à celle de la raie, cette diminution de la variance $\sigma_{raie}^2$ s'accompagne d'une augmentation de la constante de temps du filtre. Il faut donc rechercher un compromis entre la qualité de l'estimation (étroitesse du filtre) et le temps de convergence de l'estimateur. Considérant la variance $\sigma_{raie}^2$ fixée, une diminution de la variance $\sigma_{biais}^2$ induit une dégradation du filtrage des basses fréquences pour les composantes cosinus et sinus. En outre la fréquence de coupure de la réponse correspondant à la composante continue (biais) diminue lorsque la variance $\sigma^2_{biais}$ diminue (cela revient à augmenter le bruit de mesure relativement au bruit du modèle), d'où un filtrage plus conservatif.

A titre d'exemple, pour une fréquence d'échantillonnage $F_e$ donnée, des fréquences minimum et maximum $f_{min}$ et fmax du signal d'excitation, et un nombre $N_{points}$ de fréquences à identifier dans cet intervalle de fréquences, on propose de régler l'estimateur de la manière suivante :

- détermination de la variance $\sigma^2_{raie}$ pour obtenir la largeur souhaitée du filtrage passe-bande. Ceci est effectué plutôt en moyenne/haute fréquence dans l'intervalle de fréquences de sorte que le filtre ne soit pas perturbé par la composante continue du modèle. On s'assurera que le filtre est bien symétrique autour de la fréquence sélectionnée ;

- détermination de la variance $\sigma^2_{biais}$ sur la fréquence la plus basse à identifier ($f_{min}$) de sorte que la sélectivité du filtre reste acceptable à cette fréquence ;

- calculer la durée totale de l'identification induite par ce paramétrage. Si la durée n'est pas satisfaisante, augmenter la variance $\sigma^2_{raie}$ ou réduire le nombre de fréquences à identifier. Le type de balayage a un fort impact sur la durée d'identification : pour réduire celle-ci, il est préférable de choisir un balayage linéaire plutôt que logarithmique.

Dans le cas présent, on choisit $(\sigma^2_{raie} \quad \sigma^2_{biais}) = (10^{-4} \quad 10^{-2})$ pour une fréquence d'échantillonnage $F_e$ de 3 kHz. Ce réglage est adapté par exemple pour le pointage d'un dispositif optronique. Pour une autre application, les valeurs précitées peuvent servir de points de départ pour converger vers un réglage plus adapté à ladite application.

En particulier, une telle application pourrait nécessiter une fréquence d'échantillonnage différente. Or, on sait que pour un réglage donné du couple $(\sigma^2_{raie} \quad \sigma^2_{biais})$, la largeur du filtre passe-bande augmente avec la fréquence d'échantillonnage : l'identification est donc plus rapide mais de qualité moindre. Ce problème peut être résolu en recalculant les valeurs du couples $(\sigma^2_{raie} \quad \sigma^2_{biais})$ garantissant une constante de temps quasi-identique et une réponse fréquentielle équivalente lors du passage d'une fréquence d'échantillonnage à une autre.

En variante, il est possible d'alléger les calculs en utilisant l'estimateur non plus sous la forme d'une représentation d'état $\left[\begin{array}{c|c} A_K & B_K \\ \hline C_K & D_K \end{array}\right]$ comme précédemment (c'est-à-dire sous la forme d'un filtre récursif à un seul vecteur d'état) mais sous la forme prédiction/recalage avec deux vecteurs d'état en notant $\hat{X}^M_{k+1|k}$ l'état prédit et $\hat{X}^M_{k+1|k+1}$ l'état recalé (sortie de l'estimateur), les équations de récurrence du filtre à l'instant k+1 sont :

$$\begin{cases} \hat{X}^M_{k+1|k} = \Delta A_M \hat{X}^M_{k|k} \\ \hat{X}^M_{k+1|k+1} = \hat{X}^M_{k+1|k} + K_f(Y^M_{k+1} - C_M \hat{X}^M_{k+1|k}) \end{cases}$$

Le gain de Kalman $K_f$ est le même que celui défini ci-dessus. Cette implémentation est mathématiquement équivalente à la précédente mais moins coûteuse en temps de calcul. L'estimateur de fonction de transfert calcule les parties réelle et imaginaire de la fonction de transfert $\hat{F}$, entre le signal d'excitation sinusoïdal et la mesure obtenue, de l'une des trois boucles fermées suivantes :

$$\hat{F}_{mes\,1}(f_p) = \frac{e_1}{s_1} = \frac{H}{1 + KH}$$

$$\hat{F}_{mes\,2}(f_p) = \frac{e_2}{s_1} = \frac{1}{1 + KH}$$

$$\hat{F}_{mes\,3}\big(f_p\big) = \frac{e_3}{s_1} = \frac{KH}{1+KH}$$

On cherche donc à estimer (i étant l'imaginaire pur tel que $i^2=-1$) :

$$\hat{F}\big(f_p\big) = R_p + i\,I_p = G_p(\cos\big(\Psi_p\big) + i\,sin\big(\Psi_p\big))$$

On note $X_k^P$ l'état du générateur d'excitation à l'instant k et $\hat{X}_{k|k}^M$ l'état du processus estimé par le filtre de Kalman à partir de la mesure. On obtient :

$$\begin{cases} X_k^P = P_0 \begin{bmatrix} \cos(2\pi f_p\,k\,T_e) \\ sin(2\pi f_p\,k\,T_e) \end{bmatrix} \\ \hat{X}_{k|k}^M \cong X_k^M = \begin{bmatrix} G_P P_0 \cos(2\pi f_p\,k\,T_e + \Psi_p) \\ G_P P_0 \sin(2\pi f_p\,k\,T_e + \Psi_p) \\ b_0 \end{bmatrix} \end{cases}$$

On obtient le couple $\begin{bmatrix} G_P\cos(\Psi_p) \\ G_P\sin(\Psi_p) \end{bmatrix}$ à partir de l'état du processus $\hat{X}_{k|k}^M$ par une matrice T construite à partir des termes $X_k^P$ et $P_0$ :

$$T = \frac{1}{P_0^2} \begin{bmatrix} (X_k^P)_1 & (X_k^P)_2 & 0 \\ -(X_k^P)_2 & (X_k^P)_1 & 0 \\ 0 & 0 & 1 \end{bmatrix}$$

Comme précédemment,

$$(A_k)^{-1} = \frac{1}{P_0} \begin{bmatrix} (X_k^P)_1 & (X_k^P)_2 & 0 \\ -(X_k^P)_2 & (X_k^P)_1 & 0 \\ 0 & 0 & P_0 \end{bmatrix}$$

est une matrice de rotation.

On a donc :

$$X^F = \begin{bmatrix} G_P\cos(\Psi_p) \\ G_P\sin(\Psi_p) \\ \dfrac{b_0}{P_0^2} \end{bmatrix} = T\,X_k^M$$

De là découle une estimation de la partie réelle $R_p$ et de la partie imaginaire $I_p$ telle que :

$$X^F = \begin{bmatrix} G_P \cos(\Psi_p) \\ G_P \sin(\Psi_p) \\ \dfrac{b_0}{P_0^2} \end{bmatrix} \cong T\,\hat{X}_{k|k}^M$$

Cette estimation ne doit être réalisée qu'une fois que l'estimateur de Kalman a suffisamment convergé. Pour s'en assurer, on laisse s'écouler une durée égale à plusieurs fois la constante de temps caractéristique $\tau_K$ dree l'estimateur avant d'estimer la fonction de transfert. En prenant une durée égale à six fois la constante de temps caractéristique $\tau_K$, on assure une convergence de l'erreur d'estimation de 0,25%.

On notera que, pour s'assurer que les biais du système mécanique (par exemple liés à la présence d'un balourd ou d'un organe de rappel dans le cas d'une transmission de mouvement) ne viennent pas perturber la détermination de la fonction de transfert, il faut s'assurer que l'amplitude du signal sinusoïdal soit suffisante pour qu'on puisse négliger les effets qui ne sont pas engendrés par le signal sinusoïdal.

En référence à la figure 5, pour un dispositif de gouverne d'avion, la ligne de visée v est remplacée par le plan de l'aileron. L'aileron 1 est relié à l'ensemble moteur 3 et codeur 3bis par un arbre de transmission 2 en liaison pivot avec le reste de l'avion.

Bien entendu, l'invention n'est pas limitée au mode de réalisation décrit mais englobe toute variante entrant dans le champ de l'invention telle que définie par les revendications.

En particulier, l'invention est applicable à tout type de système électromécanique modélisable par une fonction de transfert linéaire et n'est donc pas limitée à une application à un dispositif de pointage et de stabilisation d'un capteur optique ou à une gouverne d'avion. L'invention est notamment utilisable avec tout dispositif comprenant un actionneur commandé via un asservissement et des mesures accessibles par un calculateur.

D'autres paramètres de modélisation peuvent être choisis en fonction de l'application envisagée. La fréquence d'échantillonnage, les variances, le nombre de fréquences à estimer...

Par signal sinusoïdal, on entend un signal sinus comme un signal cosinus.

Le module logiciel peut recevoir en entrée soit la mesure de la variable de sortie du système linéaire et/ou la différence entre la mesure de la variable de sortie du système linéaire d'une part et la consigne de commande d'autre part.

Bien que dans les modes de réalisation décrits la matrice de rotation soit définie en fonction des composantes du vecteur représentatif du signal sinusoïdal d'excitation, ce qui est avantageux en terme de simplification des calculs, ceci n'est pas obligatoire.

Par ailleurs, on notera que, dans le mode de réalisation décrit, on prend en compte les trois mesures e1, e2, e3 :

- e2 et e3 pour la « boucle ouverte » (K*H) soit une en amont du sommateur (e3) et une en aval du sommateur (e2),
- e1 et e2 pour la fonction de transfert du système électromécanique (H)

Par contre, si l'on veut mesurer à la fois les deux vitesses inertielles, la position des deux codeurs et la mesures de deux courants moteurs, on peut utiliser e4, e5, e6 en plus de e1.

La matrice T peut avoir différentes formes :

- pour avoir $b_0$, il faut :

$$T = \frac{1}{P_0^2}\begin{bmatrix} (X_k^P)_1 & (X_k^P)_2 & 0 \\ -(X_k^P)_2 & (X_k^P)_1 & 0 \\ 0 & 0 & P_0^2 \end{bmatrix}$$

- pour avoir $b_0/P_0$, il faut :

$$T = \frac{1}{P_0^2}\begin{bmatrix} (X_k^P)_1 & (X_k^P)_2 & 0 \\ -(X_k^P)_2 & (X_k^P)_1 & 0 \\ 0 & 0 & P_0 \end{bmatrix}$$

- pour avoir $b_0/P_0^2$, il faut :

$$T = \frac{1}{P_0^2}\begin{bmatrix} (X_k^P)_1 & (X_k^P)_2 & 0 \\ -(X_k^P)_2 & (X_k^P)_1 & 0 \\ 0 & 0 & 1 \end{bmatrix}$$

- on pourrait ne pas calculer $b_0$ :

$$T = \frac{1}{P_0^2}\begin{bmatrix} (X_k^P)_1 & (X_k^P)_2 & 0 \\ -(X_k^P)_2 & (X_k^P)_1 & 0 \\ 0 & 0 & 0 \end{bmatrix}$$

**Revendications**

1. Dispositif comprenant au moins un système électromécanique ayant une entrée et au moins une sortie, et une unité électronique de commande comportant un bouclage d'asservissement qui relie l'entrée et la sortie du système électromécanique et qui comporte un correcteur numérique, **caractérisé en ce que** le dispositif comprend un module logiciel ayant une entrée reliée à la sortie du système électromécanique et une sortie reliée à une entrée du système électromécanique, et **en ce que** le module logiciel est programmé pour, pour chaque fréquence d'un ensemble de fréquences à analyser :

   - engendrer au moins un signal sinusoïdal d'excitation (P) ;
   - émettre le signal sinusoïdal d'excitation sur sa sortie et récupérer un signal de réponse sur son entrée ;
   - modéliser par une représentation de Fresnel le signal de réponse et le filtrer autour de la fréquence d'excitation par au moins un filtre de Kalman pour obtenir un vecteur d'état du signal de réponse filtré ;
   - multiplier le vecteur d'état par une matrice de rotation pour obtenir une partie réelle et une partie imaginaire ;
   - effectuer une division de nombre complexe pour obtenir au moins une fonction de transfert du système à partir de la modélisation et du signal d'excitation et du signal d'entrée.

2. Dispositif selon la revendication 1, dans lequel le générateur de signaux est basé sur une représentation d'un vecteur de Fresnel en rotation suivant le modèle suivant :

   - condition initiale :

$$X_0^P = \begin{bmatrix} P_0 \\ 0 \end{bmatrix}$$

   - la dynamique du signal d'excitation :

$$X_{k+1}^P = \Delta A_p X_k^P$$

   - signal à appliquer en sortie du correcteur :

$$P_k = C_P . X_k^P$$

   - avec les matrices de la représentation d'état:

$$\begin{cases} \Delta A_P = \begin{bmatrix} \cos(2\pi f_p T_e) & -\sin(2\pi f_p T_e) \\ \sin(2\pi f_p T_e) & \cos(2\pi f_p T_e) \end{bmatrix} & B_P = \begin{bmatrix} 0 \\ 0 \end{bmatrix} \\ D_p = 0 \end{cases}$$

Dans lesquelles $C_p$ = [0 1] ou $C_p$ = [1 0].

3. Dispositif selon la revendication 1 ou 2, dans lequel la dynamique des signaux d'excitation et la dynamique des signaux de mesure sont définies par les équations suivantes :

$$\begin{cases} X_{k+1}^M = \Delta A_M X_k^M + B_M U_k + M w_k \\ \quad Y_k^M = C_M X_k^M + D_M U_k + v_k \end{cases}$$

Avec

$$X_K^M = \begin{bmatrix} M_p \cos\left(2\pi f_p k\, T_e + \Psi_p\right) \\ M_p \sin\left(2\pi f_p k\, T_e + \Psi_p\right) \\ b_0 \end{bmatrix}$$

$$Y_k^M = b_0 + M_p \sin\left(2\pi f_p k\, T_e + \Psi_p\right)$$

$$G_p = \frac{M_p}{P_0}$$

dans lesquelles $X_K^M$ comporte au moins comme composantes le cosinus et le sinus du vecteur d'état, $G_p$ est le gain, $f_p$ est la fréquence d'excitation, $\Psi_p$ est la phase, dt est la période d'échantillonnage, $w_k$ représente un bruit du modèle et $v_k$ un bruit de mesure, $b_0$ est une composante continue du système, $\Delta A_M, B_M, C_M, D_M$ sont des matrices d'état, et la matrice M est telle que

$$M = \begin{pmatrix} 1 & 0 & 0 \\ 0 & 1 & 0 \\ 0 & 0 & 1 \end{pmatrix}$$

4. Dispositif selon la revendication 3, dans lequel les matrices $\Delta A_M$, $B_M$, $C_M$, $D_M$ sont déterminées de la manière suivante :

$$\Delta A_M = \begin{bmatrix} \cos\left(2\pi f_p T_e\right) & -\sin\left(2\pi f_p T_e\right) \\ \sin\left(2\pi f_p T_e\right) & \cos\left(2\pi f_p T_e\right) \end{bmatrix}$$

$$B_M = \begin{bmatrix} 0 \\ 0 \end{bmatrix}$$

$$C_M = \begin{bmatrix} 0 & 1 \end{bmatrix} \qquad D_M = 0$$

Avec $T_e$ la période d'échantillonnage du calculateur et $f_p$ la fréquence courante du balayage.

5. Dispositif selon la revendication 3, dans lequel les matrices $A A_M, B_M, C_M, D_M$ sont déterminées de la manière suivante :

$$\Delta A_M = \begin{bmatrix} \cos(2\pi\, f_p\, T_e) & -\sin(2\pi\, f_p\, T_e) \\ \sin(2\pi\, f_p\, T_e) & \cos(2\pi\, f_p\, T_e) \end{bmatrix}$$

$$B_M = \begin{bmatrix} 0 \\ 0 \end{bmatrix}$$

$$C_M = \begin{bmatrix} 1 & 0 \end{bmatrix} \qquad D_M = 0$$

Avec $T_e$ la période d'échantillonnage du calculateur et $f_p$ la fréquence courante du balayage.

6. Dispositif selon la revendication 3, dans lequel les matrices $AA_M, B_M, C_M, D_M$ sont déterminées de la manière suivante :

$$\Delta A_M = \begin{bmatrix} \cos(2\pi\, f_p\, T_e) & -\sin(2\pi\, f_p\, T_e) & 0 \\ \sin(2\pi\, f_p\, T_e) & \cos(2\pi\, f_p\, T_e) & 0 \\ 0 & 0 & 1 \end{bmatrix}$$

$$B_M = \begin{bmatrix} 0 \\ 0 \\ 0 \end{bmatrix}$$

$$C_M = \begin{bmatrix} 0 & 1 & 1 \end{bmatrix} \qquad D_M = 0$$

Avec $T_e$ la période d'échantillonnage du calculateur et $f_p$ la fréquence courante du balayage.

7. Dispositif selon la revendication 3, dans lequel les matrices $\Delta A_M,\ B_M,\ C_M,\ D_M$ sont déterminées de la manière suivante :

$$\Delta A_M = \begin{bmatrix} \cos(2\pi\, f_p\, T_e) & -\sin(2\pi\, f_p\, T_e) & 0 \\ \sin(2\pi\, f_p\, T_e) & \cos(2\pi\, f_p\, T_e) & 0 \\ 0 & 0 & 1 \end{bmatrix}$$

$$B_M = \begin{bmatrix} 0 \\ 0 \\ 0 \end{bmatrix}$$

$$C_M = \begin{bmatrix} 1 & 0 & 1 \end{bmatrix} \qquad D_M = 0$$

Avec $T_e$ la période d'échantillonnage du calculateur et $f_p$ la fréquence courante du balayage.

8. Dispositif selon la revendication 3, dans lequel le filtre de Kalman est exploité sous la forme simplifiée suivante :

$$\begin{cases} X^M_{k+1} = \Delta A_M X^M_k + M w_k \\ Y^M_k = C_M X^M_k + v_k \end{cases}$$

9. Dispositif selon l'une quelconque des revendications 2 à 8, dans lequel la matrice de covariance du bruit de mesure est choisie égale à 1 et la matrice de covariance W du bruit de modèle est choisie comme suit :

$$W = \begin{pmatrix} \sigma^2_{raie} & 0 & 0 \\ 0 & \sigma^2_{raie} & 0 \\ 0 & 0 & \sigma^2_{biais} \end{pmatrix}$$

Avec $\sigma^2_{biais}$ la variance des biais et $\sigma^2_{raie}$ la variance du signal en entrée du module logiciel.

10. Dispositif selon la revendication 9, dans lequel la variance est fixée $10^{-2}$ et la variance $\sigma^2_{raie}$ est fixée $10^{-4}$ pour une fréquence d'échantillonnage égale à 3 kHz.

11. Dispositif selon l'une quelconque des revendications 2 à 10, dans lequel la matrice de rotation est définie en fonction des composantes du vecteur représentatif du signal sinusoïdal d'excitation.

12. Dispositif selon la revendication 11, dans lequel la matrice de rotation a la forme suivante :

$$X^F = T_k \cdot X_k^M$$

$$T_k = \frac{1}{P_0^2} \begin{bmatrix} (X_k^P)_1 & (X_k^P)_2 \\ -(X_k^P)_2 & (X_k^P)_1 \end{bmatrix}$$

$$T_k = \frac{1}{P_0^2} \begin{bmatrix} (X_k^P)_1 & (X_k^P)_2 & 0 \\ -(X_k^P)_2 & (X_k^P)_1 & 0 \\ 0 & 0 & 1 \end{bmatrix}$$

**Patentansprüche**

1. Vorrichtung, umfassend mindestens ein elektromechanisches System, das einen Eingang und mindestens einen Ausgang hat, und eine elektronische Steuereinheit, die einen Regelkreis umfasst, der den Eingang und den Ausgang des elektromechanischen Systems verbindet und einen digitalen Korrektor umfasst, **dadurch gekennzeichnet, dass** die Vorrichtung ein Softwaremodul enthält, das einen Eingang hat, der mit dem Ausgang des elektromechanischen Systems verbunden ist, und einen Ausgang, der mit einem Eingang des elektromechanischen Systems verbunden ist, und dass das Softwaremodul programmiert ist, um für jede Frequenz eines Satzes von zu analysierenden Frequenzen:

   - mindestens ein sinusförmiges Anregungssignal (P) zu erzeugen;
   - das sinusförmige Anregungssignal an seinem Ausgang auszusenden und ein Antwortsignal an seinem Eingang rückzugewinnen;
   - das Antwortsignal durch eine Fresnel-Darstellung zu modellieren und es um die Anregungsfrequenz durch mindestens ein Kalman-Filter zu filtern, um einen Zustandsvektor des gefilterten Antwortsignals zu erhalten;
   - den Zustandsvektor mit einer Rotationsmatrix zu multiplizieren, um einen realen Teil und einen imaginären Teil zu erhalten;
   - eine Division einer komplexen Zahl durchzuführen, um mindestens eine Transferfunktion für das System anhand der Modellierung, des Anregungssignals und des Eingangssignals zu erhalten.

2. Vorrichtung nach Anspruch 1, bei der der Signalerzeuger auf einer Darstellung eines Fresnel-Vektors in Rotation nach dem folgenden Modell basiert:

- Anfangszustand:

$$X_0^P = \begin{bmatrix} P_0 \\ 0 \end{bmatrix}$$

- die Dynamik des Anregungssignals:

$$X_{k+1}^P = \Delta A_p X_k^P$$

- am Ausgang des Korrektors anzuwendendes Signal:

$$P_k = C_P . X_k^P$$

- mit den Matrizen für die Zustandsdarstellung:

$$\begin{cases} \Delta A_P = \begin{bmatrix} \cos(2\pi f_p T_e) & -\sin(2\pi f_p T_e) \\ \sin(2\pi f_p T_e) & \cos(2\pi f_p T_e) \end{bmatrix} & B_P = \begin{bmatrix} 0 \\ 0 \end{bmatrix} \\ D_p = 0 \end{cases}$$

in denen $C_p$ = [0 1] oder $C_p$ = [1 0].

3. Vorrichtung nach Anspruch 1 oder 2, bei der die Dynamik der Anregungssignale und die Dynamik der Messsignale durch die folgenden Gleichungen definiert sind:

$$\begin{cases} X_{k+1}^M = \Delta A_M X_k^M + B_M U_k + M w_k \\ Y_k^M = C_M X_k^M + D_M U_k + v_k \end{cases}$$

mit

$$X_K^M = \begin{bmatrix} M_p \cos(2\pi f_p k T_e + \Psi_p) \\ M_p \sin(2\pi f_p k T_e + \Psi_p) \\ b_0 \end{bmatrix}$$

$$Y_k^M = b_0 + M_p \sin(2\pi f_p k T_e + \Psi_p)$$

$$G_p = \frac{M_p}{P_0}$$

in denen $X_K^M$ mindestens als Komponenten den Kosinus und den Sinus des Zustandsvektors umfasst, $G_p$ die Verstärkung ist, $f_p$ die Anregungsfrequenz ist, $\Psi_p$ die Phase ist, dt die Abtastperiode ist, $w_k$ ein Rauschen des Modells und $v_k$ ein Messrauschen darstellt, $b_0$ eine kontinuierliche Komponente des Systems ist, $\Delta A_M$, $B_M$, $C_M$, Dm Zustandsmatrizen sind, und die Matrix M derart ist, dass

$$M = \begin{pmatrix} 1 & 0 & 0 \\ 0 & 1 & 0 \\ 0 & 0 & 1 \end{pmatrix}$$

**4.** Vorrichtung nach Anspruch 3, bei der die Matrizen $\Delta A_M$, $B_M$, $C_M$, $D_M$ auf folgende Weise bestimmt sind:

$$\Delta A_M = \begin{bmatrix} \cos(2\pi f_p T_e) & -\sin(2\pi f_p T_e) \\ \sin(2\pi f_p T_e) & \cos(2\pi f_p T_e) \end{bmatrix}$$

$$B_M = \begin{bmatrix} 0 \\ 0 \end{bmatrix}$$

$$C_M = \begin{bmatrix} 0 & 1 \end{bmatrix} \qquad D_M = 0$$

wobei $T_e$ die Abtastperiode des Rechners und $f_p$ die aktuelle Frequenz der Abtastung ist.

**5.** Vorrichtung nach Anspruch 3, bei der die Matrizen $\Delta A_M$, $B_M$, $C_M$, $D_M$ auf folgende Weise bestimmt sind:

$$\Delta A_M = \begin{bmatrix} \cos(2\pi f_p T_e) & -\sin(2\pi f_p T_e) \\ \sin(2\pi f_p T_e) & \cos(2\pi f_p T_e) \end{bmatrix}$$

$$B_M = \begin{bmatrix} 0 \\ 0 \end{bmatrix}$$

$$C_M = \begin{bmatrix} 1 & 0 \end{bmatrix} \qquad D_M = 0$$

wobei $T_e$ die Abtastperiode des Rechners und $f_p$ die aktuelle Frequenz der Abtastung ist.

**6.** Vorrichtung nach Anspruch 3, bei der die Matrizen $\Delta A_M$, $B_M$, $C_M$, $D_M$ auf folgende Weise bestimmt sind:

$$\Delta A_M = \begin{bmatrix} \cos(2\pi f_p T_e) & -\sin(2\pi f_p T_e) & 0 \\ \sin(2\pi f_p T_e) & \cos(2\pi f_p T_e) & 0 \\ 0 & 0 & 1 \end{bmatrix}$$

$$B_M = \begin{bmatrix} 0 \\ 0 \\ 0 \end{bmatrix}$$

$$C_M = \begin{bmatrix} 0 & 1 & 1 \end{bmatrix} \qquad D_M = 0$$

wobei $T_e$ die Abtastperiode des Rechners und $f_p$ die aktuelle Frequenz der Abtastung ist.

**7.** Vorrichtung nach Anspruch 3, bei der die Matrizen $\Delta A_M$, $B_M$, $C_M$, $D_M$ auf folgende Weise bestimmt sind:

$$\Delta A_M = \begin{bmatrix} \cos(2\pi\, f_p\, T_e) & -\sin(2\pi\, f_p\, T_e) & 0 \\ \sin(2\pi\, f_p\, T_e) & \cos(2\pi\, f_p\, T_e) & 0 \\ 0 & 0 & 1 \end{bmatrix}$$

$$B_M = \begin{bmatrix} 0 \\ 0 \\ 0 \end{bmatrix}$$

$$C_M = \begin{bmatrix} 1 & 0 & 1 \end{bmatrix} \qquad D_M = 0$$

wobei $T_e$ die Abtastperiode des Rechners und $f_p$ die aktuelle Frequenz der Abtastung ist.

8. Vorrichtung nach Anspruch 3, bei der das Kalman-Filter in der folgenden vereinfachten Form implementiert ist:

$$\begin{cases} X_{k+1}^M = \Delta A_M X_k^M + M w_k \\ \quad Y_k^M = C_M X_k^M + v_k \end{cases}$$

9. Vorrichtung nach einem der Ansprüche 2 bis 8, bei der die Kovarianzmatrix des Messrauschens gleich 1 gewählt ist und die Kovarianzmatrix W des Modellrauschens wie folgt gewählt ist:

$$W = \begin{pmatrix} \sigma_{raie}^2 & 0 & 0 \\ 0 & \sigma_{raie}^2 & 0 \\ 0 & 0 & \sigma_{biais}^2 \end{pmatrix}$$

wobei $\sigma_{biais}^2$ die Bias-Varianz und $\sigma_{raie}^2$ die Varianz des Signals am Eingang des Softwaremoduls ist.

10. Vorrichtung nach Anspruch 9, bei der die Varianz $\sigma_{biais}^2$ auf $10^{-2}$ festgelegt ist und die Varianz $\sigma_{raie}^2$ auf $10^{-4}$ festgelegt ist für eine Abtastfrequenz gleich 3 kHz.

11. Vorrichtung nach einem der Ansprüche 2 bis 10, bei der die Rotationsmatrix in Abhängigkeit von Komponenten des Vektors definiert ist, der repräsentativ für das sinusförmige Anregungssignal ist.

12. Vorrichtung nach Anspruch 11, bei dem die Rotationsmatrix die folgende Form hat:

$$X^F = T_k . X_k^M$$

$$T_k = \frac{1}{P_0^2} \begin{bmatrix} (X_k^P)_1 & (X_k^P)_2 \\ -(X_k^P)_2 & (X_k^P)_1 \end{bmatrix}$$

$$T_k = \frac{1}{P_0^2} \begin{bmatrix} (X_k^P)_1 & (X_k^P)_2 & 0 \\ -(X_k^P)_2 & (X_k^P)_1 & 0 \\ 0 & 0 & 1 \end{bmatrix}$$

**Claims**

1. A device comprising at least one electromechanical system having an input and at least one output, and an electronic control unit comprising both a servo control loop connecting together the input and the output of the electromechanical system, and also a digital corrector, the device being **characterized in that** it includes a software module having an input connected to the output of the electromechanical system and an output connected to an input of electromechanical system, and **in that**, for each frequency in a set of frequencies that are to be analyzed, the software module is programmed:

   · to generate at least one sinusoidal excitation signal (P);
   · to issue the sinusoidal excitation signal on its output and to recover a response signal on its input;
   · to model the response signal by means of a Fresnel representation and to filter it about the excitation frequency by means of at least one Kalman filter in order to obtain a state vector of the filtered response signal;
   · to multiply the state vector by a rotation matrix in order to obtain a real part and an imaginary part; and
   · to perform complex number division to obtain at least one transfer function for the system from the model, from the excitation signal, and from the input signal.

2. A device according to claim 1, wherein the signal generator is based on a representation of a Fresnel vector rotating in compliance with the following model:

   · initial condition:

$$X_0^P = \begin{bmatrix} P_0 \\ 0 \end{bmatrix}$$

   · the excitation signal having the dynamic range:

$$X_{k+1}^P = \Delta A_p X_k^P$$

   · the signal to be applied to the output of the corrector:

$$P_k = C_P . X_k^P$$

   · with the following matrices for the state representation:

$$\begin{cases} \Delta A_P = \begin{bmatrix} cos\left(2\pi\, f_p\, T_e\right) & -sin\left(2\pi\, f_p\, T_e\right) \\ sin\left(2\pi\, f_p\, T_e\right) & cos\left(2\pi\, f_p\, T_e\right) \end{bmatrix} & B_P = \begin{bmatrix} 0 \\ 0 \end{bmatrix} \\ D_p = 0 \end{cases}$$

   in which $C_p$ = [0 1] or $C_p$ = [1 0].

3. A device according to claim 1 or claim 2, wherein the dynamic range of the excitation signals and the dynamic range of the measurement signals are defined by the following equations:

$$\begin{cases} X_{k+1}^M = \Delta A_M X_k^M + B_M U_k + M w_k \\ Y_k^M = C_M X_k^M + D_M U_k + v_k \end{cases}$$

   where:

$$X_K^M = \begin{bmatrix} M_p \; cos(2\pi f_p k \; T_e + \Psi_p) \\ M_p \; sin(2\pi f_p k \; T_e + \Psi_p) \\ b_0 \end{bmatrix}$$

$$Y_k^M = b_0 + M_p \; sin(2\pi f_p k \; T_e + \Psi_p)$$

$$G_p = \frac{M_p}{P_0}$$

in which $X_K^M$ includes as components at least the cosine and sine of the state vector, $G_p$ is the gain, $f_p$ is the excitation frequency, $\Psi_p$ is the phase, dt is the sampling period, $w_k$ represents model noise and $v_k$ represents measurement noise, $b_0$ is continuous component of the system, $\varDelta A_M$, $B_M$, $C_M$, $D_M$ are state matrices, and the matrix M is such that

$$M = \begin{pmatrix} 1 & 0 & 0 \\ 0 & 1 & 0 \\ 0 & 0 & 1 \end{pmatrix}$$

4. A device according to claim 3, wherein the matrices $\varDelta A_M$, $B_M$, $C_M$, $D_M$ are determined as follows:

$$\varDelta A_M = \begin{bmatrix} cos(2\pi \; f_p \; T_e) & -sin(2\pi \; f_p \; T_e) \\ sin(2\pi \; f_p \; T_e) & cos(2\pi \; f_p \; T_e) \end{bmatrix}$$

$$B_M = \begin{bmatrix} 0 \\ 0 \end{bmatrix}$$

$$C_M = \begin{bmatrix} 0 & 1 \end{bmatrix} \qquad D_M = 0$$

where $T_e$ is the sampling period of the calculation means, and $f_p$ is the current frequency being scanned.

5. A device according to claim 3, wherein the matrices $\varDelta A_M$, $B_M$, $C_M$, $D_M$ are determined as follows:

$$\varDelta A_M = \begin{bmatrix} cos(2\pi \; f_p \; T_e) & -sin(2\pi \; f_p \; T_e) \\ sin(2\pi \; f_p \; T_e) & cos(2\pi \; f_p \; T_e) \end{bmatrix}$$

$$B_M = \begin{bmatrix} 0 \\ 0 \end{bmatrix}$$

$$C_M = \begin{bmatrix} 1 & 0 \end{bmatrix} \qquad D_M = 0$$

where $T_e$ is the sampling period of the calculation means, and $f_p$ is the current frequency being scanned.

**6.** A device according to claim 3, wherein the matrices $\Delta A_M$, $B_M$, $C_M$, $D_M$ are determined as follows:

$$\Delta A_M = \begin{bmatrix} \cos(2\pi f_p T_e) & -\sin(2\pi f_p T_e) & 0 \\ \sin(2\pi f_p T_e) & \cos(2\pi f_p T_e) & 0 \\ 0 & 0 & 1 \end{bmatrix}$$

$$B_M = \begin{bmatrix} 0 \\ 0 \\ 0 \end{bmatrix}$$

$C_M = [0\ 1\ 1]$ $D_M = 0$ where $T_e$ is the sampling period of the calculation means, and $f_p$ is the current frequency being scanned.

**7.** A device according to claim 3, wherein the matrices $\Delta A_M$, $B_M$, $C_M$, $D_M$ are determined as follows:

$$\Delta A_M = \begin{bmatrix} \cos(2\pi f_p T_e) & -\sin(2\pi f_p T_e) & 0 \\ \sin(2\pi f_p T_e) & \cos(2\pi f_p T_e) & 0 \\ 0 & 0 & 1 \end{bmatrix}$$

$$B_M = \begin{bmatrix} 0 \\ 0 \\ 0 \end{bmatrix}$$

$$C_M = \begin{bmatrix} 1 & 0 & 1 \end{bmatrix} \qquad D_M = 0$$

where $T_e$ is the sampling period of the calculation means, and $f_p$ is the current frequency being scanned.

**8.** A device according to claim 3, wherein the Kalman filter is implemented in the following simplified form:

$$\begin{cases} X_{k+1}^M = \Delta A_M X_k^M + M \overline{w_k} \\ Y_k^M = C_M X_k^M + v_k \end{cases}$$

**9.** A device according to any one of claims 2 to 8, wherein the covariance matrix of the measurement noise is selected to be equal to 1 and the covariance matrix W of the model noise is selected as follows:

$$W = \begin{pmatrix} \sigma_{line}^2 & 0 & 0 \\ 0 & \sigma_{line}^2 & 0 \\ 0 & 0 & \sigma_{bias}^2 \end{pmatrix}$$

where $\sigma_{bias}^2$ is the bias variance and $\sigma_{line}^2$ is the variance of the signal at the input to the software module.

**10.** A device according to claim 9, wherein the variance $\sigma_{bias}^2$ is set at $10^{-2}$ and the variance $\sigma_{line}^2$ is set at $10^{-4}$ for a sampling frequency equal to 3 kHz.

**11.** A device according to any one of claims 2 to 10, wherein the rotation matrix is defined as a function of the components of the vector that is representative of the sinusoidal excitation signal.

12. A device according to claim 11, wherein the rotation matrix has the following form:

$$X^F = T_k . X_k^M$$

$$T_k = \frac{1}{P_0^{\,2}} \begin{bmatrix} (X_k^P)_1 & (X_k^P)_2 \\ -(X_k^P)_2 & (X_k^P)_1 \end{bmatrix}$$

$$T_k = \frac{1}{P_0^2} \begin{bmatrix} (X_k^P)_1 & (X_k^P)_2 & 0 \\ -(X_k^P)_2 & (X_k^P)_1 & 0 \\ 0 & 0 & 1 \end{bmatrix}$$

**Fig. 1**

**Fig. 5**

**Fig. 2**

S

Système à
identifier

p

e$_1$ à e$_6$

Générateur
excitation

Estimateur de
Kalman 1

Estimateur de
FT 1

FT 1 estimée

Estimateur de
Kalman 6

Estimateur de
FT 6

FT 6 estimée

13

**Fig. 3**

**Fig. 4**

**EP 4 104 024 B1**

## RÉFÉRENCES CITÉES DANS LA DESCRIPTION

**Littérature non-brevet citée dans la description**

- Identification and adaptive control of a high-contrast focal plane wavefront correction system. **HE SUN et al.** ARXIV.ORG. CORNELL UNIVERSITY LIBRARY, 201 OLIN LIBRARY CORNELL UNIVERSITY, 28 Juin 2018